# FASCICULE DE BREVET EUROPEEN

(11) **EP 2 392 550 B1**
(45) Date de publication et mention de la délivrance du brevet: **28.10.2015**
(21) Numéro de dépôt: 11305704.6
(22) Date de dépôt: 07.06.2011
(51) Int. Cl.: C03C 25/10, C08J 3/07, C08L 79/08

(54) **NOUVELLES DISPERSIONS AQUEUSES STABLES DE NANOPARTICULES DE POLYMÈRES THERMOPLASTIQUES HAUTE PERFORMANCE ET LEURS UTILISATIONS COMME AGENTS FILMIFIANTS**
NEUARTIGE STABILE WASSERLÖSLICHE DISPERSIONEN AUS THERMOPLASTISCHEN HOCHLEISTUNGS-POLYMER-NANOPARTIKELN, UND IHRE ANWENDUNGEN ALS FILMBILDENDE SUBSTANZEN
NOVEL STABLE AQUEOUS DISPERSIONS OF HIGH-PERFORMANCE THERMOPLASTIC POLYMER NANOPARTICLES AND THE USES OF SAME AS FILM-FORMING AGENTS

(30) Priorité: 07.06.2010 FR 1054437
(43) Date de publication de la demande: 07.12.2011
(73) Titulaire: Centre National de la Recherche Scientifique (CNRS), 75016 Paris (FR); Airbus Opérations SAS, 31060 Toulouse (FR)
(72) Inventeur: Bergerat, Jean-Michel, 31470 Fonsorbes (FR); Giraud, Isabelle, 31120 Portet-sur-Garonne (FR); Dantras, Eric, 31500 Toulouse (FR); Perez, Emile, 31170 Colomiers (FR); Lacabanne, Colette, 31500 Toulouse (FR)
(74) Mandataire: Blot, Philippe Robert Emile

(56) Documents cités:
- WO-A1-2009/075901
- US-A1- 2010 013 126
- US-B1- 6 228 932

## Description

La présente invention concerne le domaine des polymères convenant à la filmification, notamment l'ensimage de fibres pour en faciliter la manipulation et pour la fabrication de matériaux composites.

A l'heure actuelle, la plupart des matériaux composites utilisés dans des applications haute performance sont à base de fibres de carbone et de matrices thermodurcissables telles que les résines polyépoxy. Cependant, ces matrices thermodurcissables souffrent d'une faible résistance chimique et mécanique aux chocs entraînant une complexité de formulation qui complique leur mise en oeuvre. De plus, ces matériaux composites ne sont pas recyclables de part leur architecture de chaîne tridimensionnelle.

Ces inconvénients expliquent donc l'intérêt potentiel des matrices thermoplastiques qui satisferaient de plus aux critères de respect de l'environnement. Les matrices thermoplastiques thermostables sont utilisables dans des domaines d'activité de pointe tel que l'aéronautique et le spatial.

Quelle que soit la nature de la matrice, l'interface de la matrice avec la fibre de carbone demeure un point crucial. Pour cela, la fibre est recouverte d'une couche mince appelée ensimage. Cet ensimage est généralement de nature oligomère ou polymère qui peut être adapté en fonction de la matrice utilisée. Il a pour rôle de faciliter la manipulation des fibres lors de la mise en oeuvre mais surtout de favoriser les interactions entre la fibre et la matrice. Etant donné que la majorité des composites haute performance utilisés actuellement sont à base de matrices thermodurcissables, la plupart des ensimages sont constitués de résine époxy. De ce fait, il n'existe pas d'ensimage adapté aux matrices thermoplastiques, notamment aux matrices thermoplastiques thermostables, dont l'ensimage doit résister à des températures de mise en oeuvre élevées, parfois supérieures à 300 °C.

D'un point de vue pratique, l'ensimage se réalise idéalement par trempage ou par pulvérisation sur les fibres, à partir d'un polymère en solution ou en dispersion dans un solvant.

Pour des raisons de sécurité, de santé, mais aussi afin de préserver l'environnement, il est désirable d'utiliser l'eau comme solvant. Toutefois, les polymères thermoplastiques haute performance sont généralement insolubles dans l'eau, et leur mode de polymérisation est souvent incompatible avec cette dernière. Il est donc désirable de mettre à disposition des dispersions aqueuses stables de polymères thermoplastiques thermostables.

L'obtention de dispersions aqueuses stables de nanoparticules de polymères peut se réaliser de différentes manières :
a) par polymérisation en émulsion ou en microémulsion aqueuse, conduisant à la formation de latex,
b) par émulsion/évaporation de solvant,
c) par diffusion ou extraction de solvant,
d) par coacervation complexe.

Les méthodes b) à d) sont largement utilisées, notamment dans l'industrie pharmaceutique et agroalimentaire pour encapsuler des principes actifs, pour contrôler notamment la vitesse de libération et d'éviter la dégradation du principe actif.

Cependant, aucune dispersion aqueuse stable de polymères thermoplastiques haute performance présentant des caractéristiques physico-chimiques permettant notamment l'ensimage, n'a été mise au point.

L'invention a pour objet l'élaboration de dispersions aqueuses stables et de longue conservation, de nanoparticules de polymères ayant des propriétés physiques compatibles avec un ensimage thermoplastique.

Selon un premier objet, la présente invention concerne donc une dispersion aqueuse stable de nanoparticules d'un polymère ou mélanges de polymères thermoplastique(s) haute performance.

Les dispersions selon l'invention sont stables au moins 6 mois dans des conditions normales de stockage à température ambiante.

Dans un aspect avantageux de l'invention, les polymères à disperser seront sélectionnés en fonction de leurs propriétés physiques (tenue en température, solubilité) compatibles avec un ensimage thermoplastique, ainsi qu'avec les techniques de dispersions précédemment sélectionnées.

Lesdits polymères thermoplastiques convenant à l'invention sont choisis parmi la famille des polyétherimides et des polyaryléthercétones ainsi que de leurs mélanges comme par exemple, le polyétherimide (PEI), le polyéthercétonecétone (PEKK).

Le polyétherimide (PEI) peut être représenté par la formule suivante :

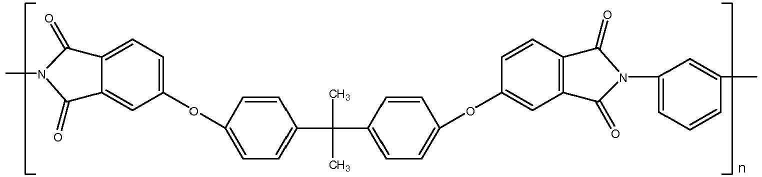

Le polyéthercétonecétone (PEKK) peut être représenté par la formule suivante :

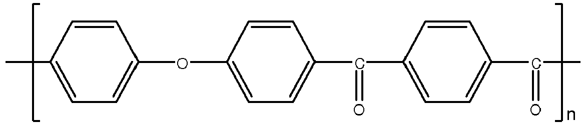

Au sens de la présente invention, par polymères on entend des composés présentant un degré de polymérisation compris entre 2 et 100.

Selon la présente invention, le PEI a préférentiellement un degré moyen de polymérisation compris entre 10 et 50, environ 20 notamment soit une masse moléculaire moyenne de 12000 g/mole, et le PEKK a préférentiellement un degré moyen de polymérisation compris entre 1 et 10, avantageusement environ 3 soit une masse moléculaire moyenne de 1000 g/mole.

Les dispersions aqueuses stables selon l'invention sont essentiellement constituées de nanoparticules du(es)dit(s) polymère(s) présentant un diamètre moyen compris entre 10 et 1000 nm, préférentiellement entre 50 et 150 nm.

Le pourcentage massique du(des)dit(s) polymère(s) dans les dispersions selon l'invention est généralement compris entre 0,01 et 0,1 %, préférentiellement entre 0,03 et 0,06 %. Ces gammes de tailles et de concentrations sont avantageuses, notamment pour un dépôt pour ensimage.

Les dispersions selon l'invention peuvent en outre comprendre un ou plusieurs agents émulsifiant et/ou dispersant. Ces agents peuvent être notamment choisis dans la famille des tensioactifs et/ou des polymères hydrosolubles ou amphiphiles.

Généralement, le pourcentage massique en agent émulsifiant et/ou dispersant est compris entre 0,01 et 20%, préférentiellement entre 0 ,01 et 5%, et avantageusement environ 0,5%.

Parmi les tensioactifs on peut mentionner les molécules amphiphiles hydrogénées ou fluorées non-ioniques, cationiques, anioniques, zwittérioniques, comme par exemple le cholate de sodium, le déoxycholate de sodium, le glycocholate de sodium, le taurocholate de sodium, le taurodéoxycholate de sodium, les lécithines, les phospholipides, le Tween 20, Tween 40, Tween 60, Tween 80, Span 20, Span 40, Span 60, Span 80, le dioctylsufosuccinate de sodium, le dodécylsulfate de sodium, des sels d'ammonium à longues chaînes tels que le bromure d'héxadécytrimethylammonium, ainsi que toutes les combinaisons de ces molécules.

Dans un aspect avantageux de l'invention, l'agent tensioactif est choisi parmi le dodécylsulfate de sodium et/ou le dioctylsulfosuccinate de sodium.

Les polymères dispersants convenant à la mise en oeuvre de la présente invention peuvent être choisis parmi les macromolécules d'origine naturelle ou synthétique, homopolymères ou copolymères, homopolymères chargés ou copolymères chargés, homopolymères amphiphiles ou copolymères amphiphiles, polymères ou copolymères hyperramifiés, dendrimères, polysaccharides ainsi que toutes les combinaisons de ces macromolécules, les émulsifiants comme la gélatine, ainsi que toutes les combinaisons de ces polymères.

Selon l'invention, les dispersions sont préparées à partir d'une émulsion ou d'une émulsion/dispersion huile dans eau par un procédé d'évaporation ou par diffusion dans l'eau d'une solution ou d'une dispersion de polymère dans la phase huileuse.

Selon un autre objet, la présente invention concerne donc également le procédé de préparation d'une dispersion selon l'invention, ledit procédé comprenant le transfert du(des)dit(s) polymère(s) d'une solution ou dispersion dans un solvant organique ou un mélange de solvants organiques vers une phase aqueuse, tel que :
- le(les)dit(s) polymère(s) est(sont) soluble(s) ou dispersable(s) dans le(s)dit(s) solvant(s) organique(s) ; et
- le(s)dit(s) solvant(s) organique(s) est(sont) miscible(s) ou non miscible(s) à l'eau.

Au sens de la présente invention, par solvant non miscible à l'eau et volatil dans des conditions normales de pression et de température, on entend des composés avantageusement constitués par le chloroforme, le chlorure de méthylène, le dichlorométhane, le dichloroéthane, des hydrocarbures aliphatiques, des hydrocarbures aliphatiques halogénés, des hydrocarbures aromatiques, le cylcohexane, des hydrocarbures aromatiques halogénés, des éthers, l'acétate d'éthyle, le formate d'éthyle et leurs mélanges. De manière plus avantageuse, le solvant est le chloroforme

Au sens de la présente invention, par solvant miscible à l'eau on entend des composés avantageusement choisis dans le groupe comprenant le méthanol, l'éthanol, l'isopropanol, le diméthylformamide, le diméthylsulfoxyde, l'acétonitrile, l'acétone le dioxanne et la N-méthyl-2-pyrrolidone. De manière plus avantageuse, le solvant est la N-méthyl-2-pyrrolidone.

Le pourcentage massique en polymère(s) dans le(s)dit(s) solvant(s) organique(s) est généralement compris entre 0,1 et 10%, préférentiellement compris entre 1 et 5%, avantageusement environ 3%.

Le procédé selon l'invention comprend généralement les étapes suivantes :
a) dissolution ou dispersion du(des)dit(s) polymère(s) dans le(s)dit(s) solvant(s) organique(s) ;
b) mélange de la solution ou dispersion obtenue à l'étape (a) à la solution aqueuse comprenant éventuellement un ou plusieurs agents émulsifiants et/ou dispersants ;
c) évaporation ou diffusion du(des)dit(s) solvant(s) organique(s).

La fraction volumique de solvant(s) dans le mélange solvant(s) + eau (étape a)) est généralement comprise entre 0,05 et 0,5, avantageusement environ 0,1.

Suivant que le(les)dit(s) polymère(s) est(sont) soluble(s) ou dispersable(s) dans le(s)dit(s) solvant(s) organique(s) et que le(s)dit(s) solvant(s) organique(s) est(sont) miscible(s) ou non miscible(s) à l'eau, on distingue donc les quatre modes de réalisation possibles (numérotés P1 à P4) de mise en oeuvre du procédé selon l'invention :
P1 :
   Lorsque (les)dit(s) polymère(s) est(sont) soluble(s) dans le(s)dit(s) solvant(s) organique(s) et que le(s)dit(s) solvant(s) organique(s) est(sont) volatil(s) non miscible(s) à l'eau, la dispersion selon l'invention peut être réalisée par émulsion et évaporation.
   Ainsi, selon ce mode de réalisation, le procédé selon l'invention comprend l'étape d'évaporation à partir d'une émulsion du(des)dit(s) polymère(s) soluble(s) dans le(s)dit(s) solvant(s) organique(s) volatil(s) non miscible(s) à l'eau.
   Plus précisément, le procédé P1 comprend les étapes successives suivantes :
   a) dissolution du polymère ou du mélange de polymères dans un solvant organique volatil, de 0,1 à 10% en masse, avantageusement 3% en masse,
   b) une quantité correspondant à un pourcentage volumique final de 5 à 50%, avantageusement 10%, du mélange obtenu suite à l'étape a) est versée dans l'eau comprenant le cas échéant un agent émulsifiant ou dispersant tel qu'un tensioactif ou un polymère, avantageusement un tensioactif. Cet agent est généralement présent à une concentration massique de 0,01 à 20%, avantageusement 0,5%. Le mélange est alors émulsifié sous forte agitation mécanique ou sous ultrasons, avantageusement sous ultrasons,
   c) l'émulsion obtenue suite à l'étape b) est agitée mécaniquement à pression atmosphérique ou sous vide et à une température pouvant aller de 5°C jusqu'à la température d'ébullition du solvant à la pression choisie. De manière plus avantageuse à température ambiante et sous pression atmosphérique. L'émulsion est ensuite agitée mécaniquement jusqu'à totale évaporation du solvant,
   d) obtention de la dispersion stable finale comprenant des particules d'une taille comprise entre 10 et 150 nm à un pourcentage massique de 0,01 à 0,1%, avantageusement 0,03%.

   De manière avantageuse, le procédé P1 est employé pour obtenir des dispersions stables de PEI, en utilisant préférentiellement le chloroforme comme solvant volatil non miscible à l'eau.
P2 :
   Lorsque le(les)dit(s) polymère(s) est(sont) soluble(s) dans le(s)dit(s) solvant(s) organique(s) et que le(s)dit(s) solvant(s) organique(s) est(sont) miscible(s) à l'eau, la dispersion selon l'invention peut être réalisée par diffusion.
   Ainsi, selon ce mode de réalisation, le procédé selon l'invention comprend l'étape de diffusion d'une solution du(des)dit(s) polymère(s) dans le(s)dit(s) solvant(s) organique(s) miscible(s) à l'eau.
   Plus précisément, le procédé P2 comprend les étapes successives suivantes :
   a) dissolution du polymère ou du mélange de polymères dans un solvant organique miscible à l'eau, de 0,1 à 5% en masse, avantageusement 3% en masse
   b) une quantité correspondant à un pourcentage volumique final de 0,1 à 50%, avantageusement 10%, du mélange obtenu suite à l'étape a) est versée ou injectée dans l'eau comprenant le cas échéant un agent émulsifiant ou dispersant tel qu'un tensioactif ou un polymère, avantageusement un tensioactif. Cet agent est généralement présent à une concentration massique de 0,01 à 20%, avantageusement 0,5%.
   c) La dispersion obtenue suite à l'étape b) est agitée mécaniquement jusqu'à diffusion totale du solvant, et de manière avantageuse à température ambiante et sous pression atmosphérique.
   d) obtention de la dispersion stable finale comprenant des particules d'une taille comprise entre 10 et 200 nm à un pourcentage massique de 0,01 à 0,1%, avantageusement 0,03%.

   De manière avantageuse, le procédé P2 est employé pour obtenir des dispersions stables de PEI, en utilisant préférentiellement la N-méthyl-2-pyrrolidone comme solvant miscible à l'eau.
P3 :
   Lorsque le(les)dit(s) polymère(s) est(sont) dispersable(s) dans le(s)dit(s) solvant(s) organique(s) et que le(s)dit(s) solvant(s) organique(s) est(sont) volatil(s) non miscible(s) à l'eau, la dispersion selon l'invention peut être réalisée par émulsion/dispersion et évaporation.
   Ainsi, selon ce mode de réalisation, le procédé selon l'invention comprend l'étape d'évaporation à partir d'une émulsion/dispersion huile dans eau du(des)dit(s) polymère(s) dispersable(s) dans le(s)dit(s) solvant(s) organique(s) volatil(s) non miscible(s) à l'eau.
   Plus précisément, le procédé P3 comprend les étapes successives suivantes :
   a) dispersion du polymère ou du mélange de polymères dans un solvant organique volatil, de 0,1 à 10% en masse, avantageusement 3% en masse,
   b) une quantité correspondant à un pourcentage volumique final de 5 à 50%, avantageusement 10%, du mélange obtenu suite à l'étape a) est versée dans l'eau comprenant le cas échéant un agent émulsifiant ou dispersant tel qu'un tensioactif ou un polymère, avantageusement un tensioactif. Cet agent est généralement présent à une concentration massique de 0,01 à 20%, avantageusement 0,5%. Le mélange est alors émulsifié/dispersé sous forte agitation mécanique ou sous ultrasons, avantageusement sous ultrasons,
   c) l'émulsion/dispersion obtenue suite à l'étape b) est agitée mécaniquement à pression atmosphérique ou sous vide et à une température pouvant aller de 5°C jusqu'à la température d'ébullition du solvant à la pression choisie, de manière plus avantageuse à température ambiante et sous pression atmosphérique. L'émulsion/dispersion est ensuite agitée mécaniquement jusqu'à totale évaporation du solvant,
   d) obtention de la dispersion stable finale comprenant des particules d'une taille comprise entre 10 et 250 nm à un pourcentage massique de 0,01 à 0,1%, avantageusement 0,03%.

   De manière avantageuse, le procédé P3 est employé pour obtenir des dispersions stables de PEKK, en utilisant préférentiellement le chloroforme comme solvant volatil non miscible à l'eau.
P4 :
   Lorsque le(les)dit(s) polymère(s) est(sont) dispersable(s) dans le(s)dit(s) solvant(s) organique(s) et que le(s)dit(s) solvant(s) organique(s) est(sont) miscible(s) à l'eau, la dispersion selon l'invention peut être réalisée par diffusion.
   Ainsi, selon ce mode de réalisation, le procédé selon l'invention comprend l'étape de diffusion d'une dispersion du(des)dit(s) polymère(s) dans le(s)dit(s) solvant(s) organique(s) miscible(s) à l'eau.
   Plus précisément, le procédé P4 comprend les étapes successives suivantes :
   a) dispersion du polymère ou du mélange de polymères dans un solvant organique miscible à l'eau, de 0,1 à 10% en masse, avantageusement 5% en masse,
   b) une quantité correspondant à un pourcentage volumique final de 0,1 à 10%, avantageusement 5%, du mélange obtenu suite à l'étape a) est versée ou injectée dans l'eau comprenant le cas échéant un agent émulsifiant ou dispersant tel qu'un tensioactif ou un polymère, avantageusement un tensioactif. Cet agent est généralement présent à une concentration massique de 0,01 à 20%, avantageusement 0,5%,
   c) La dispersion obtenue suite à l'étape b) est agitée mécaniquement jusqu'à diffusion totale du solvant, et de manière avantageuse à température ambiante et sous pression atmosphérique,
   d) obtention de la dispersion stable finale comprenant des particules d'une taille comprise ente 10 et 250 nm à un pourcentage massique de 0,01 à 0,1%, avantageusement 0,03%.

De manière avantageuse, le procédé P4 est employé pour obtenir des dispersions stables de PEKK, en utilisant préférentiellement la N-méthyl-2-pyrrolidone comme solvant miscible à l'eau.

Les dispersions aqueuses stables ainsi obtenues pourront être utilisées pour former des films de revêtement, préférentiellement pour l'ensimage de fibres ou de nanotubes de carbones ou autres morphologies à base de carbone, ainsi que des polyamides aromatiques, afin d'élaborer des matériaux composites thermoplastiques.

Ainsi, selon un autre objet, la présente invention concerne un procédé de filmification d'un support comprenant :
- le dépôt d'une dispersion selon l'invention sur ledit support ; et
- l'évaporation de l'eau.

Ledit support peut être notamment choisi parmi les fibres ou nanotubes de carbone, de polyamides aromatiques, d'aramide.

La présente invention vise également les fibres ensimées susceptibles d'être obtenues par le procédé selon l'invention.

Selon un autre objet, la présente invention concerne également un ensimage comprenant des nanoparticules d'un polymère ou mélanges de polymères thermoplastique(s) haute performance telles que définies ci-avant.

L'ensimage particulier réalisé par le film de nanoparticules déposé permet une amélioration de la mise en oeuvre des fibres et de l'adhésion entre fibres et matrice, particulièrement avec des matrices polyaryléthercétones (PAEK) telles que le polyétheréthercétone (PEEK) ou les polyethercétones (PEKs).

Selon un autre objet, la présente invention concerne également un matériau composite comprenant :
- des fibres ensimées selon l'invention ou fibres recouverte d'un ensimage selon l'invention, et
- une matrice polymère thermoplastique.

Ladite matrice thermoplastique est notamment une matrice polyaryléthercétone (PAEK) telles que le polyétheréthercétone (PEEK) ou les polyéthercétones (PEKs).

Les exemples suivants et figures auxquels ils font référence sont donnés à titre illustratif et non limitatif de la présente invention.

### Figures :

La Figure 1 représente une suspension de particules de PEI en microscopie électronique à transmission selon l'exemple 1.
La Figure 2 représente une suspension de PEKK en microscopie électronique à transmission en coloration négative selon l'exemple 3.
La Figure 3 représente une vue par microscopie électronique à balayage du film formé à partir d'une suspension de PEI selon l'exemple 7.
La Figure 4 représente une vue par microscopie électronique à balayage d'une cryofracture du composite PEEK/Fibres de carbone ensimées avec une suspension de PEI selon l'exemple 7.

### EXEMPLES

### Exemple 1 :

Dissoudre 0,0922 g de PolyEtherlmide (n=20) (PEI) dans 2 ml de chloroforme.

Dans un bécher contenant 0,1005 g de dodécylsulfate de sodium (SDS) solubilisé dans 20 mL d'eau distillée, verser la solution de PEI dissout dans le chloroforme.

Placer le bécher dans un bain d'eau à température ambiante et émulsifier sous ultrasons puissance 4 en continu pendant 5 minutes (Vibra Cell, Bioblock Scientific, 600W, 20kHz).

Evaporer totalement le chloroforme sous agitation magnétique à 1000 tours par minute à température ambiante et à pression atmosphérique.

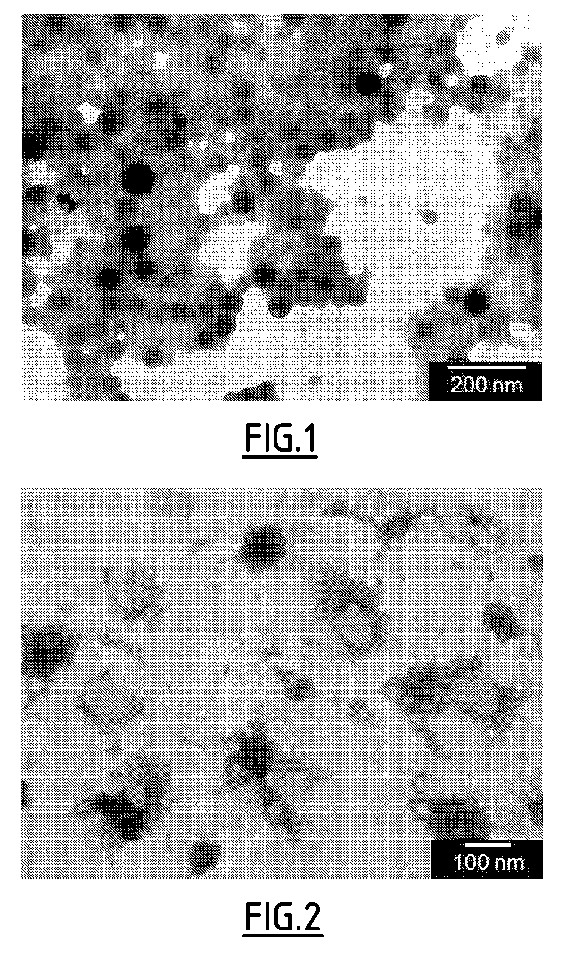

Les particules de PEI en suspension sont de taille homogène de l'ordre de 65 nm avec un indice de polydispersité de 0,33 (figure 1).

La suspension aqueuse obtenue est stable pendant 6 mois à température ambiante.

### Exemple 2 :

Dissoudre 0,0922 g de PolyEtherlmide (n=20) (PEI) dans 2 mL de chloroforme.

Dans un bécher contenant 0,1005 g de dioctylsulfosuccinate de sodium (SDOS) dissous dans 20 mL d'eau distillée, verser la solution de PEI dissous dans le chloroforme.

Placer le bécher dans un bain d'eau à température ambiante et émulsifier sous ultrasons puissance 4 en continu pendant 5 minutes (Vibra Cell, Bioblock Scientific, 600W, 20kHz).

Evaporer totalement le chloroforme sous agitation magnétique à 1000 tours par minute à température ambiante et à pression atmosphérique.

Les particules de PEI en suspension sont de taille homogène de l'ordre de 50 nm avec un indice de polydispersité de 0,29.

La suspension aqueuse obtenue est stable pendant 6 mois à température ambiante.

### Exemple 3 :

Disperser de manière homogène 0,0922 g de PolyEtherKetoneKetone (n=3) (PEKK) tel que décrit dans la littérature (Y. Sakaguchi et al., SEN'I GAKKAISHI, vol.62, No 7 (2006), p.141 ; M.G. Zolotukhin et al., Polymer, vol.38, No 6 (1997), p.1471) dans 2 mL de chloroforme en utilisant un bain à ultrasons.

Dans un bécher contenant 0,1005 g de dodécylsulfate de sodium (SDS) dissous dans 20 mL d'eau distillée, verser la dispersion de PEKK préparée dans le chloroforme.

Placer le bécher dans un bain d'eau à température ambiante et émulsifier/disperser sous ultrasons puissance 4 en continu pendant 5 minutes (Vibra Cell, Bioblock Scientific, 600W, 20kHz).

Evaporer totalement le chloroforme sous agitation magnétique à 1000 tours par minute à température ambiante et à pression atmosphérique.

Les particules de PEKK en suspension sont de taille homogène de l'ordre de 100 nm avec un indice de polydispersité de 0,28. La microscopie électronique (figure 2) montre également des agrégats de petites particules de 35 nm.

La suspension aqueuse obtenue est stable pendant 6 mois à température ambiante.

### Exemple 4 :

Bien disperser 0,0922 g de PolyEtherKetoneKetone (n=3) (PEKK) tel que décrit dans la littérature (Y. Sakaguchi et al., SEN'I GAKKAISHI, vol.62, No 7 (2006), p.141 ; M.G. Zolotukhin et al., Polymer, vol.38, No 6 (1997), p.1471) dans 2 mL de chloroforme en utilisant un bain à ultrasons.

Dans un bécher contenant 0,1005 g de dioctylsulfosuccinate de sodium (SDOS) dissous dans 20 mL d'eau distillée, verser la dispersion de PEKK préparée dans le chloroforme.

Placer le bécher dans un bain d'eau à température ambiante et émulsifier/disperser sous ultrasons puissance 4 en continu pendant 5 minutes (Vibra Cell, Bioblock Scientific, 600W, 20kHz).

Evaporer totalement le chloroforme sous agitation magnétique à 1000 tours par minute à température ambiante et à pression atmosphérique.

Les particules de PEKK en suspension sont de taille homogène de l'ordre de 150 nm avec un indice de polydispersité de 0,46.

La suspension aqueuse obtenue est stable pendant 6 mois.

### Exemple 5 (Procédé P2) :

Bien dissoudre 0,0922 g de polyetherimide (n=20) (PEI) dans 2 mL de N-méthyl-2-pyrrolidone (NMP).

Dans un bécher contenant 0,1005 g de dodécylsulfate de sodium (SDS) dissous dans 20 mL d'eau distillée, verser au goutte à goutte et sous ultrasons la solution de PEI dissous dans la NMP à l'aide d'une seringue en verre.

Continuer l'agitation sous ultrasons pendant 10 minutes de manière à obtenir une solution opalescente.

Contrôler la température à l'aide d'un bain d'eau froide pendant toute la durée de l'agitation.

Les particules de PEI en suspension sont de taille homogène de l'ordre de 170 nm avec un indice de polydispersité de 0,55.

La suspension aqueuse obtenue est stable pendant 6 mois.

### Exemple 6 (Procédé P2) :

Bien dissoudre 0,0922 g de polyétherimide (n=20) (PEI) dans 2 mL de N-méthyl-2-pyrrolidone (NMP).

Dans un bécher contenant 0,1005 g de dodécylsulfate de sodium (SDOS) dissous dans 20 mL d'eau distillée, verser au goutte à goutte et sous ultrasons la solution de PEI dissous dans la NMP à l'aide d'une seringue en verre.

Continuer l'agitation sous ultrasons pendant 10 minutes de manière à obtenir une solution opalescente.

Contrôler la température à l'aide d'un bain d'eau froide pendant toute la durée de l'agitation.

Les particules de PEI en suspension sont de taille homogène de l'ordre de 130 nm avec un indice de polydispersité de 0,45.

La suspension aqueuse obtenue est stable pendant 6 mois.

### Exemple 7 :

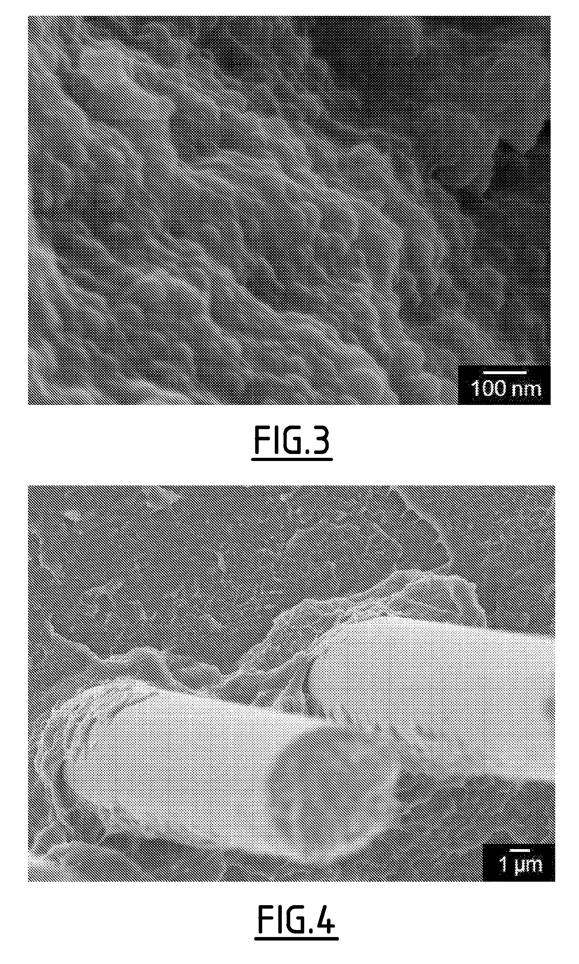

L'ensimage obtenu selon l'exemple 1 est pulvérisé sur une mèche de fibres de carbone de type AS4 12000 filaments (Hexcell, USA) non ensimée, ce qui après évaporation conduit à un film homogène de PEI (figure 3). Une fois la mèche ensimée, elle est intercalée entre deux films de 100 µm de Polyétheréthercétone (PEEK) et le tout est placé dans un moule enduit préalablement d'un agent démoulant, entre deux plateaux chauffants à 400°C mis en contact pendant 15 minutes. Dès que le moule atteint une température de 100°C, le composite peut-être démoulé. Comme le montre l'image MEB d'une cryofracture (figure 4), l'ensimage enrobe bien la fibre et se mêle aussi à la matrice.

La même procédure a été utilisée pour ensimer des fibres de carbone avec les dispersions aqueuses obtenues selon les exemples 2 à 6.

## Revendications

1. Dispersion aqueuse stable au moins 6 mois dans des conditions normales de stockage à température ambiante de nanoparticules d'un polymère ou mélanges de polymères thermoplastique(s) haute performance, telle que le(s)dit(s) polymère(s) est(sont) choisi(s) parmi les polyétherimides, les polyaryléthercétones et leurs mélanges.

2. Dispersion selon la revendication 1 telle que le pourcentage massique du(des)dit(s) polymère est compris entre 0,01 et 0,1 %.

3. Dispersion selon la revendication 1 ou 2 telle que lesdites nanoparticules ont un diamètre moyen compris entre 10 et 1000 nm.

4. Dispersion selon l'une quelconque des revendications précédentes comprenant en outre un ou plusieurs agents émulsifiant et/ou dispersant choisis dans la famille des tensioactifs ou des polymères hydrosolubles ou amphiphiles.

5. Dispersion selon la revendication 4 tel que le pourcentage massique en agent émulsifiant et/ou dispersant est compris entre 0,01 et 20%.

6. Procédé de préparation d'une dispersion selon l'une quelconque des revendications précédentes, comprenant le transfert du(des)dit(s) polymère(s) d'une solution ou dispersion dans un solvant organique ou un mélange de solvants organiques vers une phase aqueuse, tel que :
- le(les)dit(s) polymère(s) est(sont) soluble(s) ou dispersable(s) dans le(s)dit(s) solvant(s) organique(s) ; et
- le(s)dit(s) solvant(s) organique(s) est(sont) miscible(s) ou non miscible(s) à l'eau.

7. Procédé selon la revendication 6 tel que ledit procédé comprend l'étape d'évaporation à partir d'une émulsion du(des)dit(s) polymère(s) soluble(s) dans le(s)dit(s) solvant(s) organique(s) volatil(s) non miscible(s) à l'eau.

8. Procédé selon la revendication 6 ou 7 tel que ledit procédé comprend l'étape d'évaporation à partir d'une émulsion/dispersion huile dans eau du(des)dit(s) polymère(s) dispersable(s) dans le(s)dit(s) solvant(s) organique(s) volatil(s) non miscible(s) à l'eau.

9. Procédé selon la revendication 6, 7 ou 8 tel que ledit procédé comprend l'étape de diffusion d'une solution du(des)dit(s) polymère(s) dans le(s)dit(s) solvant(s) organique(s) miscible(s) à l'eau.

10. Procédé selon l'une quelconque des revendications 6 à 9, ledit procédé comprend l'étape de diffusion d'une dispersion du(des)dit(s) polymère(s) dans le(s)dit(s) solvant(s) organique(s) miscible(s) à l'eau.

11. Procédé selon la revendication 7 ou 8 tel que le(s)dit(s) solvant(s) organique(s) volatil(s) non miscible(s) à l'eau sont choisis parmi le chloroforme, le chlorure de méthylène, le dichlorométhane, le dichloroéthane, des hydrocarbures aliphatiques, des hydrocarbures aliphatiques halogénés, des hydrocarbures aromatiques, le cylcohexane, des hydrocarbures aromatiques halogénés, des éthers, l'acétate d'éthyle, le formate d'éthyle et leurs mélanges.

12. Procédé selon la revendication 9 ou 10, le(s)dit(s) solvant(s) organique(s) miscible(s) à l'eau sont choisis parmi le méthanol, l'éthanol, l'isopropanol, le diméthylformamide, le diméthylsulfoxyde, l'acétonitrile, l'acétone le dioxanne et la N-méthyl-2-pyrrolidone.

13. Procédé selon l'une quelconque des revendications 6 à 12 tel que le pourcentage massique en polymère(s) dans le(s)dit(s) solvant(s) organique(s) est compris entre 0,1 et 10%.

14. Procédé selon l'une quelconque des revendications 6 à 13, **caractérisé en ce qu'**il comprend les étapes suivantes :
a) dissolution ou dispersion du(des)dit(s) polymère(s) dans le(s)dit(s) solvant(s) organique(s) ;
b) mélange de la solution ou dispersion obtenue à l'étape (a) à la solution aqueuse comprenant éventuellement un ou plusieurs agents émulsifiants et/ou dispersants ;
c) évaporation ou diffusion du(des)dit(s) solvant(s) organique(s).

15. Procédé de filmification d'un support comprenant :
- le dépôt d'une dispersion selon l'une quelconque des revendications 1 à 5 sur ledit support ; et
- l'évaporation de l'eau.

16. Procédé selon la revendication 15 tel que ledit support est choisi parmi les fibres ou nanotubes de carbone, d'aramide.

17. Fibres ensimées susceptibles d'être obtenues par le procédé selon la revendication 15 ou 16.

18. Ensimage comprenant des nanoparticules d'un polymère ou mélanges de polymères thermoplastique(s) haute performance selon l'une quelconque des revendications 1 à 5.

19. Matériau composite comprenant :
- des fibres ensimées selon la revendication 17 ou 18 et
- une matrice polymère thermoplastique.

## Patentansprüche

1. Eine wässrige Dispersion von Nanopartikeln eines thermoplastischen Hochleistungspolymers oder Mischungen von thermoplastischen Hochleistungspolymeren, die unter normalen Lagerungsbedingungen bei Raumtemperatur mindestens 6 Monate stabil ist, wobei das/die Polymer(e) ausgewählt ist/sind aus Polyetherimiden, Polyaryletherketonen und ihren Mischungen.

2. Die Dispersion gemäß Anspruch 1, wobei der Massenprozentsatz des/der Polymers/e zwischen 0,01 und 0,1 % beträgt.

3. Die Dispersion gemäß Anspruch 1 oder 2, wobei die Nanopartikel einen durchschnittlichen Durchmesser zwischen 10 und 1000 nm haben.

4. Die Dispersion gemäß einem der voranstehenden Ansprüche, umfassend des Weiteren einen oder mehrere Emulgier- und/oder Dispersionsmittel ausgewählt aus der Gruppe der Tenside oder der wasserlöslichen oder amphiphilen Polymere.

5. Die Dispersion gemäß Anspruch 4, wobei der Massenprozentsatz des Emulgier- und/oder des Dispersionsmittels zwischen 0,01 und 20 % beträgt.

6. Ein Verfahren zur Herstellung einer Dispersion gemäß einem der voranstehenden Ansprüche, umfassend die Überführung des/der Polymers/e einer Lösung oder Dispersion in einem organischen Lösemittel oder einer Mischung von organischen Lösemitteln in eine wässrige Phase, wobei:
- das/die Polymer(e) löslich oder dispergierbar in dem/den organischen Lösemittel(n) ist/sind; und
- das/die organische(n) Lösemittel mischbar oder nicht mischbar mit Wasser ist/sind.

7. Das Verfahren gemäß Anspruch 6, wobei das Verfahren den Schritt des Verdampfens aus der Emulsion des/der Polymers/e, das/die in dem/den organischen, flüchtigen, nicht mir Wasser mischbaren Lesemittel(n) löslich ist/sind, umfasst.

8. Das Verfahren gemäß Anspruch 6 oder 7, wobei das Verfahren den Schritt des Verdampfens aus einer Öl-in-Wasser Emulsion/Dispersion des/der Polymers/e, das/die in dem/den organischen, flüchtigen, nicht mit Wasser mischbaren Lösemittel(n) dispergierbar ist/sind, umfasst.

9. Das Verfahren gemäß Anspruch 6, 7 oder 8, wobei das Verfahren den Schritt der Diffusion einer Lösung des/der Polymers/e in dem/den organischen, mit Wasser mischbaren Lösemittel(n) umfasst.

10. Das Verfahren gemäß den Ansprüchen 6 bis 9, wobei das Verfahren den Schritt der Diffusion einer Dispersion des/der Polymers/e in dem/den organischen, mit Wasser mischbaren Lösemittel(n) umfasst.

11. Das Verfahren gemäß Anspruch 7 oder 8, wobei das/die organische(n), flüchtige(n), mit Wasser nicht mischbare(n) Lösemittel ausgewählt ist/sind aus Chloroform, Methylenchlorid, Dichlormethan, Dichlorethan, aliphatischen Kohlenwasserstoffen, halogenierten aliphatischen Kohlenwasserstoffen, aromatischen Kohlenwasserstoffen, Cyclohexan, halogenierten aromatischen Kohlenwasserstoffen, Ethern, Ethylacetat, Ameisensäureethylester und ihren Mischungen.

12. Das Verfahren gemäß Anspruch 9 oder 10, wobei das/die organische(n), mit Wasser mischbare(n) Lösemittel ausgewählt ist/sind aus Methanol, Ethanol, Isopropanol, Dimethylformamid, Dimethylsulfoxid, Acetonitril, Aceton, Dioxan und N-Methyl-2-pyrrolidon.

13. Das Verfahren gemäß einem der Ansprüche 6 bis 12, wobei der Massenprozentsatz des/der Polymers/e in dem/den organischen Lösemittel(n) zwischen 0,1 und 10 % beträgt.

14. Das Verfahren gemäß einem der Ansprüche 6 bis 13, **gekennzeichnet dadurch, dass** es folgende Schritte umfasst:
a) Lösen oder Dispergieren des/der Polymers/e in dem/den organischen Lösemittel(n);
b) Mischen der Lösung oder der Dispersion, die aus Schritt a) erhalten wurde, mit der wässrigen Lösung umfassend wahlweise ein oder mehrere Emulgier- und/oder Dispersionsmittel;
c) Verdampfen oder Diffusion des/der organischen Lösemittel(s).

15. Ein Verfahren der Filmbildung eines Trägers umfassend:
- die Ablagerung einer Dispersion gemäß einem der Ansprüche 1 bis 5 auf dem Träger; und
- das Verdampfen von Wasser.

16. Das Verfahren gemäß Anspruch 15, wobei der Träger ausgewählt ist aus Fasern oder Nanoröhren aus Kohlenstoff, aus Aramiden.

17. Beschlichtete Fasern, die durch ein Verfahren gemäß Anspruch 15 oder 16 erhältlich sind.

18. Schlichtung umfassend Nanopartikel aus einem thermoplastischen Hochleistungspolymer oder einer Mischung von thermoplastischen Hochleistungspolymeren gemäß einem der Ansprüche 1 bis 5.

19. Verbundwerkstoff umfassend:
- beschlichtete Fasern gemäß Anspruch 17 oder 18 und
- eine thermoplastische Polymermatrix.

## Claims

1. An aqueous dispersion of nanoparticles of a high performance thermoplastic polymer or of mixtures of high performance thermoplastic polymers, where the dispersion is stable for at least six months under normal storage conditions at room temperature,and where said polymer(s) is(are) selected from polyetherimides, polyaryletherketones and mixtures thereof.

2. The dispersion according to claim 1 such that the mass percentage of said polymers is comprised between 0.01 and 0.1 %.

3. The dispersion according to claim 1 or 2, such that said nanoparticles have an average diameter comprised between 10 and 1,000 nm.

4. The dispersion according to anyone of the preceding claims, further comprising one or more emulsifying and/or dispersing agents selected from the family of surfactants or water-soluble or amphiphilic polymers.

5. The dispersion according to claim 4, such that the mass percentage of emulsifying and/or dispersant agent is comprised between 0.01 and 20%.

6. A method for preparing a dispersion according to anyone of the preceding claims, comprising the transfer of said polymer(s) of a solution or dispersion in an organic solvent or in a mixture of organic solvents to an aqueous phase, such that:
- said polymer(s) is(are) soluble or dispersible in said organic solvent(s); and
- said organic solvent(s) is(are) miscible or not miscible with water.

7. The method according to claim 6, such that said method comprises the evaporation step from an emulsion of said polymer(s) soluble in said volatile organic solvent(s) non-miscible with water.

8. The method according to claim 6 or 7, such that said method comprises the evaporation step from an oil-in-water emulsion/dispersion of said polymers dispersible in said volatile organic solvent(s) and non-miscible with water.

9. The method according to claim 6, 7 or 8, such that said method comprises the diffusion step for a solution of said polymer(s) in said organic solvent(s) miscible with water.

10. The method according to anyone of claims 6 to 9, said method comprises the step for diffusing a dispersion of said polymer(s) in said organic solvent(s) miscible with water.

11. The method according to claim 7 or 8 such that said volatile organic solvent(s) non-miscible with water are selected from chloroform, methylene chloride, dichloromethane, dichloroethane, aliphatic hydrocarbons, halogenated aliphatic hydrocarbons, aromatic hydrocarbons, cyclohexane, halogenated aromatic hydrocarbons, ethers, ethyl acetate, ethyl formate and mixtures thereof.

12. The method according to claim 9 or 10, said organic solvent(s) miscible with water are selected from methanol, ethanol, isopropanol, dimethylformamide, dimethylsulfoxide, acetonitrile, acetone, dioxane and N-methyl-2-pyrrolidone.

13. The method according to anyone of claims 6 to 12, such that the mass percentage of polymer(s) in said organic solvent(s) is comprised between 0.1 and 10%.

14. The method according to anyone of claims 6 to 13, **characterized in that** it comprises the following steps:
a) dissolution or dispersion of said polymer(s) in said organic solvent(s);
b) mixing of the solution or dispersion obtained in step (a) with the aqueous solution optionally comprising one or more emulsifying and/or dispersant agents;
c) evaporation or diffusion of said organic solvent(s).

15. A method for generating a film on a support comprising:
- deposition of a dispersion according to anyone of claims 1 to 5 on said support; and
- evaporation of the water.

16. The method according to claim 15, such that said support is selected from carbon fibers or nanotubes, aramide fibers.

17. Sized fibers which may be obtained by the method according to claim 15 or 16.

18. A sizing comprising nanoparticles of a high performance thermoplastic polymer or of high performance thermoplastic polymers according to anyone of claims 1 to 5.

19. A composite material comprising:
- sized fibers according to claim 17 or 18 and
- a thermoplastic polymer matrix.
